# EUROPEAN PATENT SPECIFICATION

(11) **EP 1 431 993 B1**
(45) Date of publication and mention of the grant of the patent: **17.01.2007**
(21) Application number: 02445188.2
(22) Date of filing: 19.12.2002
(51) Int. Cl.: H01H 3/16

(54) **Connector with integrated switch**
Elektrische Verbinderanordnung mit einem Erkennungsschalter
Assemblage de connecteur électrique avec un intérrupteur de détection de la connexion

(43) Date of publication of application: 23.06.2004
(73) Proprietor: Sony Ericsson Mobile Communications AB, 221 88 Lund (SE)
(72) Inventor: Steijner, Magnus, 237 31 Bjärred (SE)
(74) Representative: Akerman, Marten Lennart

(56) References cited:
- EP-A- 0 367 610
- EP-A- 1 187 267
- WO-A-00/69033
- WO-A-98/19434
- US-A- 5 828 343
- US-B1- 6 342 738

## Description

### Field of the invention

The present invention relates to multifunctional switch circuits. Particularly, the invention relates to multifunctional switch circuits devised for use in foldable devices having limited space for electronics, such as portable radio communication terminals or laptop computers, and also to such devices including such circuits.

### Background

Since the end of the 20^{th} century the cellular telephone industry has had enormous development in the world. From the initial analog systems, such as those defined by the standards AMPS (Advanced Mobile Phone System) and NMT (Nordic Mobile Telephone), the development has during recent years been almost exclusively focused on standards for digital solutions for cellular radio network systems, such as D-AMPS (e.g., as specified in EIA/TIA-IS-54-B and IS-136) and GSM (Global System for Mobile Communications). Different digital transmission schemes are used in different systems, e.g. time division multiple access (TDMA) or code division multiple access (CDMA). Currently, the cellular technology is entering the so called 3^{rd} generation, providing several advantages over the former, 2^{nd} generation, digital systems referred to above. Among those advantages an increased bandwidth will be provided, allowing effective communication of more complex data. The 3^{rd} generation of mobile systems have been referred to as the UMTS (Universal Mobile Telephony System) in Europe and CDMA2000 in the USA, and is already implemented in Japan to some extent. Furthermore, it is widely believed that the first generation of Personal Communication Networks (PCNs), employing low cost, pocket-sized, cordless telephones that can be carried comfortably and used to make or receive calls in the home, office, street, car, etc., will be provided by, for example, cellular carriers using the next generation digital cellular system infrastructure.

A lot of effort has been made in making smaller terminals, with much help from the miniaturisation of electronic components and the development of more efficient batteries. In only a couple of decades the communication systems have gone from analogue to digital, and at the same time the dimensions of the communication terminals have gone from briefcase size to the pocket size phones of today. Today, numerous manufacturers offer pocket-sized terminals with a wide variety of capabilities and services, such as packet-oriented transmission and multiple radio band coverage. Still today, mobile phones are getting smaller and smaller and the size is generally considered to be an important factor for the end customer. The development in electronics has made it possible to miniaturise the components of the terminals, at the same time making the terminals capable of performing more advanced functions and services. The development of new transmission schemes, the so-called 3^{rd} generation mobile system standing at the door and the 4^{th} generation to be expected maybe ten years later, also provides the possibility to convey more advanced data to the wireless communication terminals, such as real time video.

The end users have a number of conflicting requirements on the mobile phones. Basically, the terminal should be as small and light-weight as possible. Furthermore, is should provide more and more advanced functions, have a long battery time, and a user-friendly interface. As technology advances, new or previously implemented features can be miniaturised, rendering smaller terminals. This concerns e.g. battery technology and electronics. Still, there is only so much space in a terminal, and in order to be competitive the elements of the terminal must be carefully packaged. Built-in antennas of different types have eliminated the need for protruding antenna elements, but the most frequently used type of built-in antennas, the so called PIFA (Planar Inverted-F Antenna), will instead add to the height of the terminal since it must be placed a certain distance from the PCB ground plane in order to provide a sufficient bandwidth.

A common design for radio communication terminals is to fit a terminal body with a slidable or pivotable lid, a so called flip. When closed, the flip is arranged as a lid covering a data input interface, such as a keypad or a touch-sensitive screen. This protects the terminal and makes it more difficult to accidentally trigger the data input interface when the terminal is stowed in e.g. a pocket or bag. Furthermore, when unfolded the flip will add to the length of the terminal, thereby placing an audio input, such as a speaker or a sound channel input arranged adjacent to the outer end of the flip, closer to a user's mouth when in use.

The first flips were merely protective, but an increasing number and variety of functional items have been introduced in the flip throughout the years. One design is the so called clamshell arrangement, wherein at least parts of the data input interface, such as the keypad, have been arranged on the inside of the flip. This makes it possible to reduce the overall length of the terminal when folded, since the input and output interfaces will then be folded to face each other. In the clamshell design, the terminal member carrying the keypad may be said to be more than a flip, but the features and purposes of the flip are of course also provided by such an arrangement. Other designs have also been suggested, in which functional items have been placed on the outside of the flip, such as an additional display, or a keypad.

For the sake of simplicity, all types of foldable terminal designs comprising a first terminal member, and a second terminal member which is pivotable in relation to the first terminal member between a first, closed, position in which the second terminal member at least partly covers the first terminal member, and a second, open, position in which the second terminal member extends from the first terminal member, are herein referred to as a terminal comprising a terminal body and a flip. This specifies that the terminal comprises at least two members, which are hinged together, but does not specify which functions or means are included on the terminal body and the flip. Furthermore, the reference of a terminal with a terminal body and a flip should not be interpreted as being limited to a design in which these two items are hinged together at respective short side ends, as is the general case for a mobile phone. On the contrary, the terminal body and the flip may just as well be hinged together at respective longer side ends, which is the case for e.g. a laptop computer.

A terminal comprising a terminal body and a flip preferably comprises some form of means for detecting if the terminal is arranged in the closed position or in the open position. In one embodiment, such means are provided by a mechanical switch, devised to sense the present position of the flip in relation to the terminal body. The purpose of such a switch may be to activate or deactivate certain terminal features dependent on the position of the flip, such as a data input or output interface. Furthermore, if the flip carries an electrical functional element which requires supply of electrical power and/or data signals from the terminal body, there must be some form of electrical connector between the flip and the terminal body. It should be pointed out that the situation may also be the opposite, i.e. that means included in the terminal body requires data signals or electrical power from the flip. This is entirely dependent on the specific design of the terminal.

State of the art document EP1187267 A2 discloses a switch-equipped coaxial connector, comprising an insulative housing having a hollow section and a bottom plate between the hollow section and the board. A fixed terminal is attached to the insulative housing from side and has a contact section provided within the hollow section. A movable terminal is attached to the insulative housing from side and has a movable section biased upwardly within the hollow section to make contact with the contact section. A central conductor is provided for sliding in the axial direction of the insulative housing. The connector also includes a spring member for supporting the central conductor, and an outer conductor provided outside the spring member and the insulative housing such that when the central conductor is depressed, the movable section is separated from the contact section of the fixed terminal.

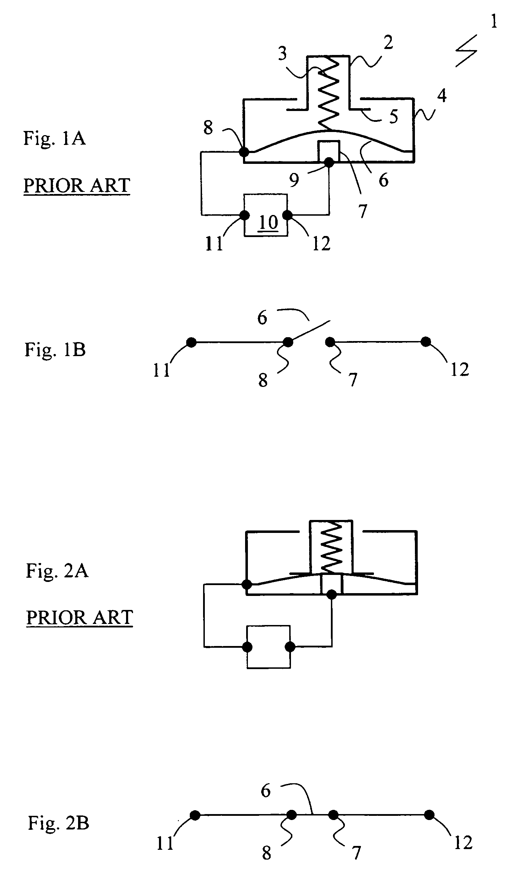

Fig. 1A schematically illustrates a state of the art switch 1 for detecting the position of the flip. A hat member 2 provides a push button function, and hat member 2 is supported in a switch chassis 4. The hat member 2 is biased in the position illustrated in Fig. 1A, by means of a spring 3 forcing the hat member 2 outwards. Below the hat member 2, a first connector element 6 in the shape of a metal element is suspended at a distance from a second connector element 7. At 8 the first connector element 6 is connected to a closed loop detector 10 through connection point 11. Furthermore, at 9 the second connector element 7 is connected to said closed loop detector 10 through connection point 12. It should be noted that spring 3 need not be included. Instead, connector element 6 may be a metal leaf spring which automatically assumes the position on Fig. 1A in its rested state. Hat member 2 may then of course always be in contact with connector element 6, and optionally the hat member 2 and connector element 6 may be formed integrally from one piece of shaped metal sheet.

Fig. 1B illustrates the open state of switch 1, corresponding to the switch as it is illustrated in Fig. 1A, as seen from the closed loop detector 10.

Fig. 2A schematically illustrates the switch of Fig. 1A, but in a closed state. Hat member 2 has been pushed down by application of a force overcoming the load of spring 3, and also the spring load of metal connector 6, which may be larger than the bias load of the spring 3. Again, spring 3 may not be present, and in that case it is only the load of connector element 6 that needs to be exceeded. In this state, the connector elements 6 and 7 have been brought into connection with each other, such that a current can pass between points 8 and 9.

Fig. 2B illustrates the closed state of switch 1, corresponding to the switch as it is illustrated in Fig. 2A, as seen from the closed loop detector 10.

A problem with the terminals of today is that the known solutions require one switch for detecting if the flip is open or closed, and one connector device for establishing contact between the flip and the terminal body. This occupies a lot of space in the terminal, and requires two components. This is a drawback both from an economic point of view, and in the light of the general desire to minimise the overall size of the terminal.

### Summary of the invention

Hence, it is an object of the present invention to provide a device and an arrangement for foldable terminals which overcome the above-identified deficiencies related to the prior art.

According to a first aspect, this object is fulfilled by a switch device according to claim 1. The detailed description shows specific features of various embodiments related to the invention.

### Brief description of the drawings

The present invention will now be described in more detail with reference to preferred embodiments, given only by way of example and illustrated in the accompanying drawings, in which:
Fig. 1A illustrates a prior art switch usable in a foldable terminal, depicted in an open state;
Fig. 1B schematically illustrates the function of the switch of Fig. 1A in its open state;
Fig. 2A illustrates the prior art switch Fig. 1A in a closed state;
Fig. 2B schematically illustrates the function of the prior art switch in its closed state;
Fig. 3A illustrates a first example of a foldable terminal type in an open, unfolded, state;
Fig. 3B illustrates said first example of a foldable terminal type in a closed, folded, state;
Fig. 4A illustrates a second example of a foldable terminal type in an open, unfolded, state;
Fig. 4B illustrates said second example of a foldable terminal type in a closed, folded, state;
Fig. 5A illustrates a third example of a foldable terminal type in an open, unfolded, state;
Fig. 5B illustrates said third example of a foldable terminal type in a closed, folded, state;
Fig. 6 illustrates a first embodiment of a switch device according to the invention, in a rested state;
Fig. 7 schematically illustrates the function of the switch device in the state of Fig. 6 when implemented in an open foldable terminal;
Fig. 8 illustrates the switch device of Fig. 6 in a triggered state;
Fig. 9 schematically illustrates the function of the switch device in the state of Fig. 8 when implemented in a closed foldable terminal;
Fig. 10 illustrates a second embodiment of a switch device according to the invention, in a rested state;
Fig. 11 schematically illustrates the function of the switch device in the state of Fig. 10 when implemented in an open foldable terminal;
Fig. 12 illustrates the switch device of Fig. 10 in a triggered state; and
Fig. 13 schematically illustrates the function of the switch device in the state of Fig. 12 when implemented in a closed foldable terminal.

### Detailed description of preferred embodiments

The present description relates to the field of foldable data communication or processing devices, comprising a terminal body and a flip. The data communication or processing devices are in short denoted terminal in this disclosure, and includes all mobile equipment devised for radio communication with a radio station, which radio station also may be mobile terminal or e.g. a stationary base station. Consequently, the term terminal includes data communication devices such as mobile telephones, pagers, communicators, electronic organisers, smartphones, PDA:s (Personal Digital Assistants) and DECT terminals (Digital Enhanced Cordless Telephony). Further, the present invention is equally applicable to data processing devices such as laptop computers. Furthermore, it should be emphasised that the term comprising or comprises, when used in this description and in the appended claims to indicate included features, elements or steps, is in no way to be interpreted as excluding the presence of other features elements or steps than those expressly stated.

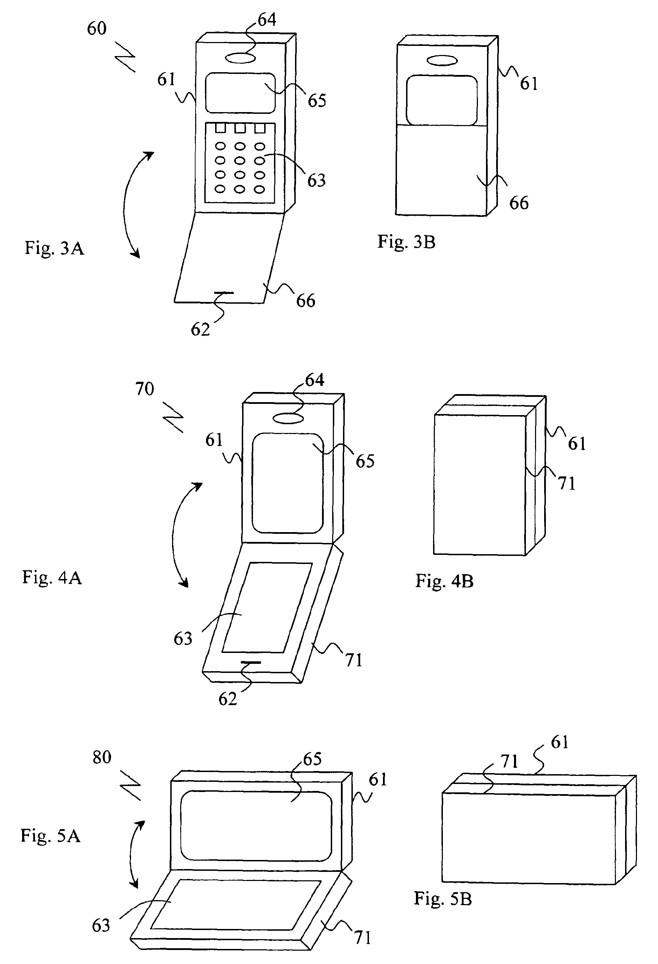

Exemplary embodiments will now be described with references made to the accompanying drawing, in which Figs 3A to 5B illustrate different embodiments of terminals for which the present invention is applicable.

Fig. 3A illustrates a radio communication terminal 60, such as a mobile phone. The terminal 60 comprises a terminal body 61 carried in a chassis, directly or indirectly supporting the other components of the terminal. Terminal 60 is devised with a user-input interface, in the displayed embodiment comprising a microphone 62 and a keypad 63. The user input interface may also, or instead of the keypad, comprise a touch-sensitive display. Furthermore, a user output interface of the terminal 60 comprises a loudspeaker 64 and a display 65. All of these features are well known in the prior art. Though not shown in Fig. 3A, or in any of Figs 3B to 5B for that matter, the communication terminal 60 further includes an antenna, radio transmission and reception electronics, and preferably a power supply in the form of a battery. Communication terminal 60 is also devised with a computer system, including a microprocessor with associated memory and software.

A flip 66 is pivotably attached to the terminal body 61 by means of a hinge arrangement. Fig. 3A illustrates the terminal 60 in an open state, in which the orientation of the flip 66 relative to the terminal body 61 is such that the flip 66 extends away from the terminal body 61. In this open state the data input interface 62,63 is exposed.

In Fig. 3B the terminal 60 has been folded to a closed state, in which the relative orientation of the flip 66 is such that it faces the terminal body 61, and covers at least a portion of the data input interface. In the illustrated example of Fig. 3B the flip 66 covers the keypad 63, but leaves the display 65 visible. The terminal body 61 constitutes a first terminal member, whereas the flip 66 constitutes a second terminal member.

Figs 4A and 4B illustrate another kind of terminal 70, of the so called clamshell type. In these Figs the same reference markings are used for similar features as in Figs 3A and 3B, for the sake of simplicity. This includes e.g. the microphone 62 and the keypad 63 of the data input interface, the speaker 64 and the display 65 of the data output interface, and the first terminal member 61. The clamshell type of terminal differs from the one illustrated in Figs 3A and 3B, in that at least parts of the data input interface is located on a second terminal member 71, which is attached in a pivotable relation to the first terminal member 61. In the illustrated embodiment, the microphone 62 and the keypad 63 are arranged on the second terminal member. Furthermore, these elements 62,63 of the data input interface are positioned on the side of the second terminal member that faces the first terminal member when the terminal 70 is folded to a closed state, as illustrated in Fig. 4B. Needless to say there are variants of the clamshell type of terminal, in which both the input and the output interfaces may comprise different parts arranged on both the first 61 and the second terminal member. With the wording used to describe the embodiment of Figs 3A and 3B, the first terminal member 61 may be referred to as a terminal body 61, whereas the second terminal member 71 may be referred to as a flip 71 carrying a functional element of the terminal 70. In this case, that functional element is the data input interface 62,63.

Figs 5A and 5B yet another type of terminal 80, also in which the same reference markings are used for similar features as in Figs 3A to 4B, for the sake of simplicity. The terminal 80 includes a data output interface 65 arranged on a first terminal member 61, and a data input interface 63 arranged on a second terminal member 71. Also this type of terminal may include audio interfaces, i.e. a microphone and a speaker, but these have not been included in the illustrated embodiment. The terminal type of Figs 5A and 5B differ from the previously described types in that the two terminal members 61 and 71 are hinged together at respective longer side edges. One example of a terminal of the type illustrated in Figs 5A and 5B is a laptop computer. As before, the first terminal member 61 may be referred to as a terminal body 61, whereas the second terminal member 71 may be referred to as a flip 71 carrying a functional element of the terminal 70. In this case, that functional element is the data input interface 63.

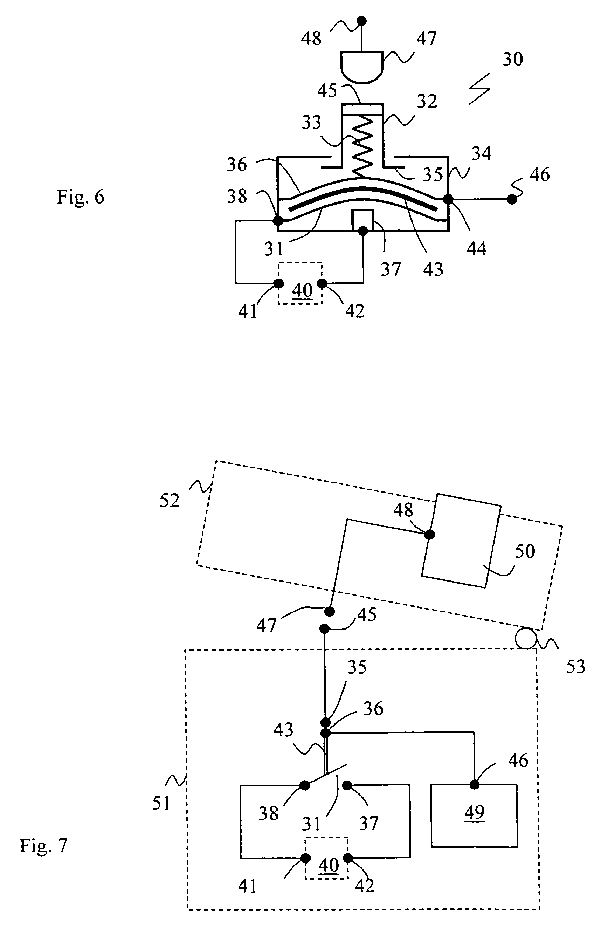

Fig. 6 illustrates a switch device 30 according to a first embodiment of the invention. This switch device is advantageously designed for use in a terminal according to any of the embodiments suggested in Figs 3A to 5B, i.e. in a terminal comprising a terminal body and a flip. The switch device 30 comprises a support structure 34, such as a casing, and a button member 32 which is displaceable in relation to the support structure 34. The button member is biased by a spring member 33, forcing said button member 32 outwards from said support structure 34. Preferably there are stopping means provided for preventing the button member 32 from falling of the support structure 34, such as the flange illustrated at the bottom of button member 32.

One purpose with the switch device 30 is to control the connection between connector elements 31 and 37, forming a switch, for closing or opening a circuit through the switch device 30 between poles 37 and 38. These poles 37,38 are preferably connected to a switch state detecting circuit 40, such as a closed loop detection circuit or an open loop detection circuit. When the button member 32 is pressed down the switch is closed, and when the button member is released the switch automatically assumes an open state by means of a built in resiliency of connector element 31. The resilient connector element 31 is preferably a metal leaf spring. This function is similar to that of the prior art design of Fig. 1A. Consequently, the switch device 30 is preferably positioned on a first terminal member, or a second terminal member, of a foldable terminal, such that a trigger member 47 on the other terminal member will press down said button member 32 in a predetermined terminal state, i.e. folded or unfolded. This way, the switch state detecting circuit 40 may be used to determine if the terminal is folded or unfolded, which can be used by the microprocessor system of the terminal to control different functions in the terminal.

According to the invention, an electrical connector is integrated in the switch device 30, devised to translate electricity from said trigger member 47, by said button member 32 and through said switch device, upon depression of said button member 32. The button member 32 is preferably entirely made of a good conducting metal material, and at least it comprises a conductive connector surface 45 on the tip of the button member 32. This connector surface 45 is electrically connected to a lower connector surface 35 of the button member 32. The button member 32 interacts with a cooperating member 36, and is kept separated from said cooperating member in its rested state by said spring member 33. The cooperating member 36 is also conductive, and is preferably formed as a thin metal object. A connector pad 46 is connected to the cooperating member 36 at 44.

Preferably the mechanical connection between the button member 32 and the cooperating member 36 provided by the spring member 33 is electrically insulating, such that the lower connector surface 35 has to come in contact with the cooperating member 36 to provide electrical connection between the connector surface 45 on the tip of the button member and connection pad 46. This may be achieved in different ways, e.g. by a non-conductive spring member 33, or by an insulating connection between the spring member 33 and either the button member 32 or the cooperating member 36. It should be noted, though, that it is not necessary for the trigger member 47 to disengage from connector surface 45 in this embodiment. On the contrary, trigger member 47 and connector surface 45 may be constantly engaged, and even integrated, since it is only the displacement of the button member 32 that marks the change between open or closed circuit for the lower connector surface 35 and the cooperating member 36.

In an alternative embodiment, the spring provides an electrical connection, such that trigger member 47 is automatically connected to a pad 46 through the switch device 30 when contact with the top 45 of the button member 32 is accomplished, without the need for said button member to be depressed. In this alternative embodiment, trigger member 47 and connector surface 45 must be separated, i.e. disengaged, in the open state illustrated in Fig. 6. Otherwise, the circuit between 46 and 48 will always be closed regardless of whether button member 32 is depressed or not.

In a preferred embodiment, the cooperating member 36 is a leaf spring which is arranged face to face with said resilient connector element 31, with an intermediate insulator 43, such as a sheet of paper or plastic. This way a sandwiched unit structure is obtained, in which the cooperating member 36 is mechanically connected to the resilient connector element 31, such that displacement of the cooperating member 36 induces a corresponding displacement of the connector element 31. Still said sandwiched unit has two opposite electrically conductive surfaces which are insulated from each other. Preferably, both said cooperating member 36 and said connector element 31 are biased to assume the position illustrated in Fig. 6.

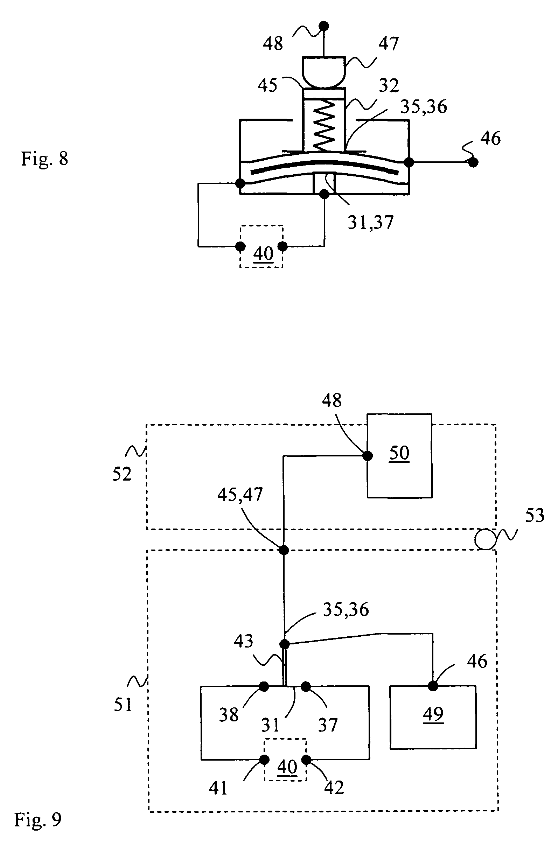

Fig. 8 illustrates the switch device of Fig. 6 in a depressed state. In that state, the button member 32 and the cooperating member 36 are held in electrical contact with each other, and furthermore the resilient connector element 31 is forced in contact with connector element 37. It should be noted that also connector element 37 may be resilient.

The switch is preferably used in a foldable terminal comprising a first and a second terminal member. With reference to Figs 7 and 9, the function of the switch in such an implementation is described below.

Fig. 7 illustrates a foldable terminal having a first terminal member 51 and a second terminal member 52, which terminal members are interconnected by a hinge device 53. In Fig. 7 the terminal is arranged in an open state. The first terminal member is fitted with a switch device according to that of Fig. 6, and the same reference markings have been used in Fig. 7. When the terminal is open, or unfolded, the connector members 35 and 36 are kept apart by the resilient action of spring 33. Furthermore, since the sandwich unit is not depressed, its resilient character forces the resilient member 31 out of connection from the connector element 37. An open circuit is therefore detected by the switch state detection circuit 40.

In Fig. 9 the terminal has been closed, or folded, such that a trigger member 47 on the second terminal member 52, e.g. a surface portion of or a protruding member on the second terminal member 52, has engaged with and depressed said button member 32. By this action, electrical contact is provided between trigger member 47 and connector surface 45 of said button member 32. Furthermore, the button member 32 has been pressed against cooperating member 36, such that an electric connection is provided from trigger member 47 through the switch device to a connection pad 46 in the first terminal member 51. By the same action, resilient connector member 31 has been forced into contact with connector member 37, whereby the switch state detection circuit 40 will detect a closed circuit.

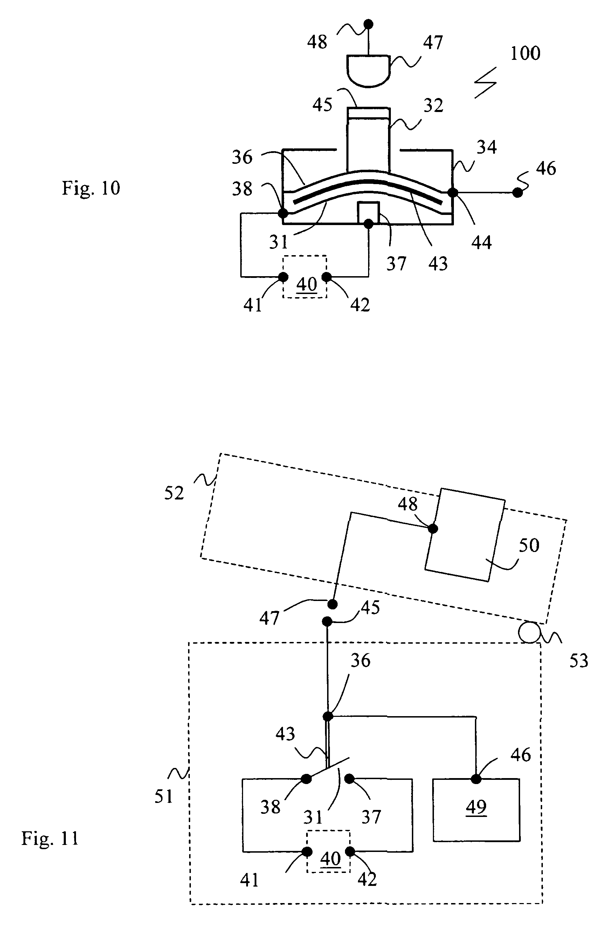

Fig. 10 illustrates a switch device 100 according to a second embodiment of the invention. This second embodiment is quite similar to the embodiment of Fig. 6, and the same reference markings have been used for corresponding parts. However, in this second embodiment, button member 32 is directly connected to, preferably integrated with, the cooperating member 36. The button member 32 and the cooperating member thereby forms a single conductive element, preferably formed from a thin metal object. The flange-shaped part constituted by the cooperating member 36 forms a leaf spring, for which the rested state is illustrated in Fig. 10. Once trigger member 47 contacts the connector surface 45 of button member 32, connection between 46 and 48 through button member 32 is thereby achieved, even without the button member 32 being depressed.

Therefore, in this embodiment the same switch device 100 provides the function of connecting connection pads 46 and 48 to each other, which connector pads are preferably arranged on different terminal members, and closing the circuit between 41 and 42 such that a closed loop is achieved.

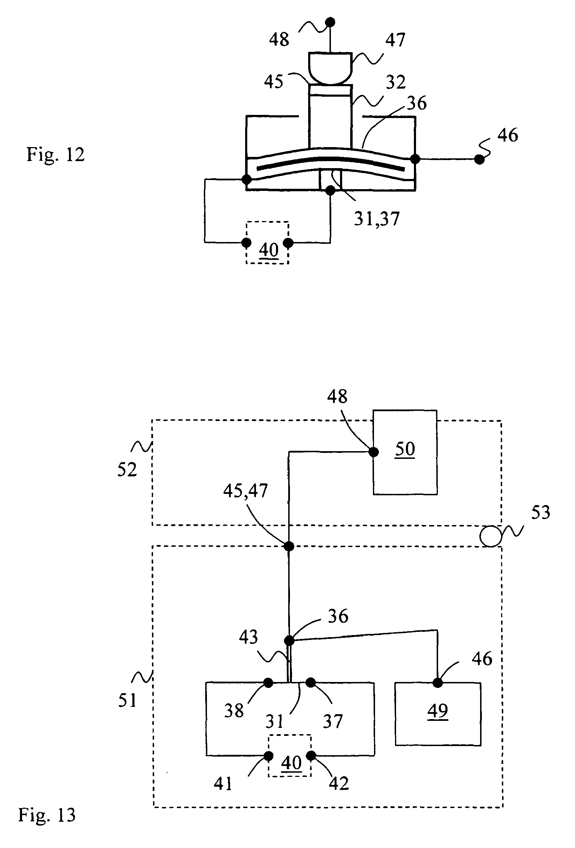

Fig. 12 illustrates the switch device of Fig. 10 in a depressed state. In that state, wherein the resilient connector element 31 is forced in contact with connector element 37. It should be noted that both the connector element 31 and the cooperating member 36 may be resilient, but in an alternative embodiment, only one of these members is biased, whereas the other of the two members follows the biased member's movement when it returns to its rested state. The same applies for the embodiments of Figs 6 to 9.

Fig. 11 illustrates a foldable terminal having a first terminal member similar to that of Fig. 7. When the terminal is open, or unfolded, the trigger member 47 is separated or disengaged from connector surface 45, although connector surface 45 is connected to cooperating member 36. Furthermore, since the sandwich unit is not depressed, its resilient character forces the resilient member 31 out of connection from the connector element 37. An open circuit is therefore detected by the switch state detection circuit 40.

In Fig. 13 the terminal has been closed, or folded, such that a trigger member 47 on the second terminal member 52, e.g. a surface portion of or a protruding member on the second terminal member 52, has engaged with and depressed said button member 32. By this action, electrical contact is provided between trigger member 47 and connector surface 45 of said button member 32, which in turn is connected to connection pad 46 in the first terminal member 51. By the depressing action, resilient connector member 31 has also been forced into contact with connector member 37, whereby the switch state detection circuit 40 will detect a closed circuit.

Preferably, the means for electrically interconnecting the terminal members 51,52 dependent on the relative orientation of said terminal members to each other, as provided by the invention, is used to control the operation or function of certain functional elements dependent on if the terminal is folded or unfolded. In the example of Figs 7 and 9, or Figs 11 and 13, the second terminal member 52 is a flip comprising a solar cell 50 having an exposure surface on the side of the flip facing outwards when the terminal is folded. When the terminal is held in its folded state, said solar cell 50 is connected at connection pad 48 through the switch device to a connection pad 46 on a printed circuit board PCB in the first terminal member or terminal body 51. Said solar cell may then be used to power the terminal, or advantageously for charging a battery in the terminal body 51. Once the terminal is unfolded, the connection between the solar cell and the PCB is cut by the switch device. The terminal is then not operable by using the power of the solar cell, but has to use electrical energy from the battery.

It should be noted, though, that the electrical connection between the terminal members 51,52 provided by the switch device does not necessarily have to include power connection. The electrical interconnection may optionally, or additionally, include data signal leads. In one example, the functional element 50 on the flip is a display which is only to be used in the folded state of the terminal. Such a display may e.g. be used only to alert a user of an incoming call, and provide associated information such as calling telephone number. Once the flip 52 is opened, a larger and possibly more advanced display located on the face of the first terminal body is exposed. In that unfolded state, there is no need to power nor send data signals to the display 50, and hence the switch device cuts the connection between the terminal members for the purpose of saving power and processor capacity.

The foregoing has described the principles, preferred embodiments and modes of operation of the present invention. However, the invention should not be construed as being limited to the particular embodiments discussed above. Notably, the features that have been highlighted in relation to specific embodiments are applicable to any of the terminal types of Figs 3A to 5B. Thus, the above-described embodiments should be regarded as illustrative rather than restrictive, and it should be appreciated that variations may be made in those embodiments by workers skilled in the art without departing from the scope of the present invention, as defined by the following claims.

## Claims

1. Switch device (30), adapted for use in a terminal comprising a first terminal member and a second terminal member pivotably connected to the first terminal member, said switch device comprising a switch (31,37) which can be set to an open or closed state, a displaceable switch activator member (32) for setting said switch, the switch device further comprising a trigger member (47) devised to engage and trigger said switch activator member at a predetermined relative orientation of said terminal members to each other, an electrical connection between said terminal members being provided between said trigger member and a conductive cooperating member (36) through said switch activator member in said predetermined relative orientation, **characterised in that** said cooperating member comprises a first metallic sheet (36) and **in that** a first switch member comprises a second resilient metallic sheet (31), wherein said metallic sheets are sandwiched with an intermediate insulating member (43), and **in that** a second switch member (37) of said switch is disposed on an opposite side of said metallic sheets from said activator member.

2. The switch device as recited in claim 1, **characterised in that** said electrical connection is accomplished upon engagement between said trigger member and said switch activator member.

3. The switch as recited in claim 1, **characterised in that** said sandwiched metallic sheets and isolating member are resilient, and biased to assume a predetermined switch setting.

4. The switch as recited in claim 1, **characterised in that** said displaceable switch activator member comprises a button member (32) and a spring member (33), and **in that** a first connector surface (45) is provided on a tip of said button member.

5. The switch as recited in claim 4, **characterised in that** said first connector surface is electrically connected to a second connector surface (35) of said button member, facing said cooperating member.

6. The switch as recited in claim 4, **characterised in that** said button member is formed of a conductive material.

7. The switch device as recited in claim 5, **characterised in that** said switch activator member is biased by means of said spring member to disconnect from said cooperating member.

8. The switch device as recited in claim 5, **characterised in that** said spring member mechanically connects said button member with said cooperating member.

9. The switch device as recited in claim 5, **characterised in that** said spring electrically isolates said button member from said cooperating member.

10. The switch device as recited in claim 5, **characterised in that** said spring electrically connects said button member to said cooperating member.

11. The switch as recited in claim 1, **characterised in that** said displaceable switch activator member comprises a conductive button member (32) and said cooperating member, and **in that** a first connector surface (45) is provided on a tip of said button member.

12. The switch as recited in claim 11, **characterised in that** said button member is integrated with said cooperating member.

13. The switch as recited in any of the previous claims, **characterised in that** said switch is connected to a switch state detecting circuit (40).

14. Terminal comprising a first terminal member and a second terminal member pivotably connected to the first terminal member, **characterised in that** it includes a switch device as recited in any of the previous claims 1 - 12.

15. The terminal as recited in claim 14, **characterised in that** a switch according to any of the previous claims 1 - 12 is disposed on said first terminal member.

16. The terminal as recited in claim 15, **characterised in that** a trigger member according to any of the previous claims 1 - 12 is disposed on said second terminal member.

17. The terminal as recited in claim 16, **characterised in that** said trigger member is devised to engage with and push a switch activator member according to any of the previous claims 1 - 12 in a folded state of said terminal.

18. The terminal as recited in claim 16, **characterised in that** said trigger member is devised to engage with and push a switch activator member according to any of the previous claims 1 - 12 in an unfolded state of said terminal.

19. The terminal as recited in claim 15, **characterised in that** said switch is connected to a switch state detecting circuit (40).

20. The terminal as recited in claim 16, **characterised in that** a cooperating member according to any of the previous claims 1 - 12 is connected to a first functional terminal element (49) disposed on said first terminal member (51), whereas said trigger member is connected to a second functional terminal element (50) disposed on said second terminal member (52).

21. The terminal as recited in claim 20, **characterised in that** said first or said second functional terminal element includes a power supply unit.

22. The terminal as recited in claim 21, **characterised in that** said power supply unit comprises a solar cell.

## Patentansprüche

1. Schaltvorrichtung (30), welche zur Verwendung in einem Terminal (Endgerät) angepasst ist, welches ein erstes Terminalelement und ein zweites Terminalelement umfasst, welches schwenkbar mit dem ersten Terminalelement verbunden ist, wobei die Schaltvorrichtung einen Schalter (31, 37) umfasst, welcher in einen offenen oder geschlossenen Zustand gestellt werden kann, ein versetzbares Schalteraktiverungselement (32) zum Stellen des Schalters, wobei die Schaltvorrichtung weterhin ein Auslöselement (47) umfasst, welches gestaltet ist, um das Schalteraktivierungselement an einer vorbestimmten relativen Orientierung der Terminalelemente zueinander in Eingriff zu nehmen und zu aktivieren, wobei eine elektrische Verbindung zwischen den Terminalelementen zwischen dem Auslöselement und einem leitenden kooperierenden Element (36) durch das Schalteraktivierungselement in der vorbestimmten relativen Orientierung vorgesehen ist, **dadurch gekennzeichnet, dass** das kooperierende Element eine erste Metallplatte (36) umfasst, und dass ein erstes Schalterelement eine zweite elastische Metallplatte (31) umfasst, wobei die Metallplatten mit einem dazwischen eingelegten intermediaren Isolierelement (43) verbunden sind, und dass ein zweites Schalterelement (37) des Schalters auf einer gegenüberliegenden Seite der Metallplatten von dem Aktivierungselement angeordnet ist.

2. Schaltervorrichtung gemäß Anspruch 1, **dadurch gekennzeichnet, dass** die elektrische Verbindung auf einen Eingriff zwischen dem Auslöselement und dem Schalteraktivierungselement hin zu Stande kommt.

3. Schaltervorrichtung gemäß Anspruch 1, **dadurch gekennzeichnet, dass** die Metallplatten mit dem dazwischen eingelegten Isolierelement elastisch sind und vorgespannt werden, um eine vorbestimmte Schalterstellung anzunehmen.

4. Schaltervorrichtung gemäß Anspruch 1, **dadurch gekennzeichnet, dass** das versetzbare Schalteraktivierungselement eine Knopfelement (32) und ein Federelement (33) umfasst, und dass eine erste Verbinderoberfläche (45) auf einer Spitze des Knopfelements vorgesehen ist.

5. Schaltervorrichtung gemäß Anspruch 4, **dadurch gekennzeichnet, dass** die erste Verbinderoberfläche elektrisch mit einer zweiten Verbinderoberfläche (35) des Knopfelements verbunden ist, welche dem kooperierenden Element gegenüberliegt.

6. Schaltervorrichtung gemäß Anspruch 4, **dadurch gekennzeichnet, dass** das Knopfelement aus einem leitenden Material gebildet ist.

7. Schaltervorrichtung gemäß Anspruch 5, **dadurch gekennzeichnet, dass** das Schalteraktivierungselement mittels des Federelements vorgespannt wird, um sich von dem kooperierenden Element abzutrennen.

8. Schaltervorrichtung gemäß Anspruch 5, **dadurch gekennzeichnet, dass** das Federelement das Knopfelement mechanisch mit dem kooperierenden Element verbindet.

9. Schaltervorrichtung gemäß Anspruch 5, **dadurch gekennzeichnet, dass** die Feder das Knopfelement elektrisch von dem kooperierenden Element isoliert.

10. Schaltervorrichtung gemäß Anspruch 5, **dadurch gekennzeichnet, dass** die Feder das Knopfelement elektrisch mit dem kooperierenden Element verbindet.

11. Schaltervorrichtung gemäß Anspruch 1, **dadurch gekennzeichnet, dass** das versetzbare Schalteraktivierungselement ein leitendes Knopfelement (32) und das kooperierende Element umfasst, und dass eine erste Verbinderoberfläche (45) auf einer Spitze des Knopfelements vorgesehen ist.

12. Schaltervorrichtung gemäß Anspruch 11, **dadurch gekennzeichnet, dass** das Knopfelement in das kooperierende Element integriert ist.

13. Schaltervorrichtung gemäß irgendeinem der vorhergehenden Ansprüche, **dadurch gekennzeichnet, dass** der Schalter mit einer Schalterzustands-Detektierschaltung (40) verbunden ist.

14. Terminal (Endgerät), welches ein erstes Terminalelement und ein zweites Terminalelement umfasst, welches schwenkbar mit dem ersten Terminalelement verbunden ist, **dadurch gekennzeichnet, dass** es eine Schaltervorrichtung gemäß irgendeinem der vorhergehenden Ansprüche 1 - 12 umfasst.

15. Terminal gemäß Anspruch 14, **dadurch gekennzeichnet, dass** ein Schalter gemäß irgendeinem der vorhergehenden Ansprüche 1 -12 auf dem ersten Terminalelement angeordnet ist.

16. Terminal gemäß Anspruch 15, **dadurch gekennzeichnet, dass** ein Auslöselement gemäß irgendeinem der Ansprüche 1 - 12 auf dem zweiten Terminalelement angeordnet ist.

17. Terminal gemäß Anspruch 16, **dadurch gekennzeichnet, dass** das Auslöselement ausgestaltet ist, um ein Schalteraktivierungselement gemäß irgendeinem der vorhergehenden Ansprüche 1- 12 in einem eingeklappten Zustand des Terminals in Eingriff zu nehmen und zu schieben.

18. Terminal gemäß Anspruch 16, **dadurch gekennzeichnet, dass** das Auslöselement ansgestaltet ist, um ein Schalteraktivierungselement gemäß irgendeinem der vorhergehenden Ansprüche 1 - 12 in einem ausgeklappten Zustand des Terminals in Eingriff zu nehmen und zu schieben.

19. Terminal gemäß Anspruch 15, **dadurch gekennzeichnet, dass** der Schalter mit einer Schalterzustands-Detektierschaltung (40) verbunden ist.

20. Terminal gemäß Anspruch 16, **dadurch gekennzeichnet, dass** ein kooperierendes Element gemäß einem der vorhergehenden Ansprüche 1 - 12 mit einem ersten funktionellen Terminalelement (49) verbunden ist, welches auf dem ersten Terminalelement (51) angeordnet ist, wohingegen das Auslöselement mit einem zweiten funktionellen Terminalelement (50) verbunden ist, welches auf dem zweiten Terminalelement (52) angeordnet ist.

21. Terminal gemäß Anspruch 20, **dadurch gekennzeichnet dass** das erste und zweite funktionelle Terminalelement eine Stromzufuhreinheit umfasst.

22. Terminal gemäß Anspruch 21, **dadurch gekennzeichnet, dass** die Stromzufuhreinheit eine Solarzelle umfasst.

## Revendications

1. Dispositif interrupteur (30), adapté pour utilisation dans un terminal comprenant un premier élément de terminal et un second élément de terminal relié de manière pivotante au premier élément de terminal, ledit dispositif interrupteur comprenant un interrupteur (31, 37) qui peut être instauré dans un état ouvert ou un état fermé, un élément (32) déplaçable activateur d'interrupteur permettant de manoeuvrer ledit interrupteur, le dispositif interrupteur comprenant en outre un élément déclencheur (47) conçu pour engager et pour déclencher ledit élément activateur d'interrupteur dans une orientation relative prédéterminée desdits éléments de terminal, une connexion électrique entre lesdits éléments de terminal étant établie entre ledit élément déclencheur et un élément conducteur coopérant (36) par l'intermédiaire dudit élément activateur d'interrupteur dans ladite orientation relative prédéterminée, **caractérisé en ce que** ledit élément de coopération comprend une première feuille métallique (36) et **en ce qu'**un premier élément d'interrupteur comprend une seconde feuille métallique élastique (31), dans lequel lesdites feuilles métalliques forment une structure en sandwich avec un élément isolant intermédiaire (43), et **en ce qu'**un second élément (37) d'interrupteur dudit interrupteur est disposé sur un côté opposé desdites feuilles métalliques par rapport audit élément activateur.

2. Dispositif interrupteur selon la revendication 1, **caractérisé en ce que** ladite connexion électrique est établie lors de l'engagement entre ledit élément déclencheur et ledit élément activateur d'interrupteur.

3. Interrupteur selon la revendication 1, **caractérisé en ce que** lesdites feuilles métalliques et ledit élément isolant pris en sandwich sont élastiques et sont rappelés pour prendre un état de commutation prédéterminé.

4. Interrupteur selon la revendication 1, **caractérisé en ce que** ledit élément activateur amovible d'interrupteur comprend un élément bouton (32) et un élément ressort (33), et **en ce qu'**une première surface (45) de connecteur est réalisée sur un bout dudit élément bouton.

5. Interrupteur selon la revendication 4, **caractérisé en ce que** ladite première surface de connecteur est connectée électriquement à une seconde surface (35) de connecteur dudit élément bouton, laquelle fait face audit élément coopérant.

6. Interrupteur selon la revendication 4, **caractérisé en ce que** ledit élément bouton est formé d'un matériau conducteur.

7. Dispositif interrupteur selon la revendication 5, **caractérisé en ce que** ledit élément activateur d'interrupteur est rappelé au moyen dudit élément ressort pour être déconnecté dudit élément coopérant.

8. Dispositif interrupteur selon la revendication 5, **caractérisé en ce que** ledit élément ressort établit une liaison mécanique entre ledit élément bouton et ledit élément coopérant.

9. Dispositif interrupteur selon la revendication 5, **caractérisé en ce que** ledit ressort isole électriquement ledit élément bouton dudit élément coopérant.

10. Dispositif interrupteur selon la revendication 5, **caractérisé en ce que** ledit ressort établit une connexion électrique entre ledit élément bouton et ledit élément coopérant.

11. Interrupteur selon la revendication 1, **caractérisé en ce que** ledit élément activateur d'interrupteur déplaçable comprend un élément bouton conducteur (32) et ledit élément coopérant, et **en ce qu'**une première surface (45) de connecteur est réalisée sur un bout dudit élément bouton.

12. Interrupteur selon la revendication 11, **caractérisé en ce que** ledit élément bouton est intégré audit élément coopérant.

13. Interrupteur selon l'une quelconque des revendications précédentes, **caractérisé en ce que** ledit interrupteur est connecté à un circuit (40) de détection d'état d'interrupteur.

14. Terminal comprenant un premier élément de terminal et un second élément de terminal relié de manière pivotante au premier élément de terminal, **caractérisé en ce qu'**il inclut un dispositif interrupteur selon l'une quelconque des revendications précédentes 1 à 12.

15. Terminal selon la revendication 14, **caractérisé en ce qu'**un interrupteur selon l'une quelconque des revendications précédentes 1 à 12 est disposé sur ledit premier élément de terminal.

16. Terminal selon le revendication 15, **caractérisé en ce qu'**un élément déclencheur selon l'une quelconque des revendications précédentes 1 à 12 est disposé sur ledit second élément de terminal.

17. Terminal selon la revendication 16, **caractérisé en ce que** ledit élément déclencheur est conçu pour, dans un état plié dudit terminal, engager et pousser un élément activateur d'interrupteur selon l'une quelconque des revendications précédentes 1 à 12.

18. Terminal selon la revendication 16, **caractérisé en ce que** ledit élément déclencheur est conçu pour, dans un état déplié dudit terminal, engager et pousser un élément activateur d'interrupteur selon l'une quelconque des revendications précédentes 1 à 12.

19. Terminal selon la revendication 15, **caractérisé en ce que** ledit interrupteur est connecté à un circuit (40) de détection d'état d'interrupteur.

20. Terminal selon la revendication 16, **caractérisé en ce qu'**un élément coopérant selon l'une quelconque des revendications précédentes 1 à 12 est connecté à on premier élément fonctionnel (49) de terminal disposé sur ledit premier élément (51) de terminal, tandis que ledit élément déclencheur est connecté à un second élément fonctionnel (50) de terminal disposé sur ledit second élément (52) de terminal.

21. Terminal selon la revendication 20, **caractérisé en ce que** ledit premier ou ledit second élément fonctionnel de terminal inclut un module d'alimentation.

22. Terminal selon la revendication 21, **caractérisé en ce que** ledit module d'alimentation comprend une pile solaire.
